# EUROPÄISCHE PATENTANMELDUNG

(11) **EP 1 593 308 A2**
(43) Veröffentlichungstag der Anmeldung: **09.11.2005**
(21) Anmeldenummer: 05009700.5
(22) Anmeldetag: 03.05.2005
(51) Int. Cl.: A21C 15/04

(54) **Vorrichtung zur Herstellung von Brotterrinen**

(30) Priorität: 06.05.2004 DE 102004023035
(71) Anmelder: Imielski, Anton, 83727 Schliersee (DE)
(72) Erfinder: Imielski, Anton, 83727 Schliersee (DE)
(74) Vertreter: Beckord, Klaus

(57) **Zusammenfassung**

Beschrieben wird eine Vorrichtung (1) zur Herstellung von Brotterrinen aus Brotlaiben, mit einer Abtrenneinrichtung (3), mit der ein Deckelstück (8) eines Brotlaibs von einem Unterteil (7) abtrennbar ist, und mit einer Fräseinrichtung (4), mit der von einer Abtrennfläche aus in das Unterteil (7) eine Kavität einfräsbar ist, die dahingehend verbessert ist, dass die Abtrenneinrichtung (3) ein Messer (18) aufweist, das unabhängig von einer möglichen Förderbewegung des Brotlaibs durch ihn hindurch bewegbar ausgebildet ist. Außerdem weist die Fräseinrichtung (4) einen variablen Fräsendurchmesser auf.

## Beschreibung

Die Erfindung betrifft eine Vorrichtung zur Herstellung von Brotterrinen. In einer derartigen Vorrichtung werden Brotlaibe, die entsprechend der äußeren Form der gewünschten Brotterrinen geformt sind, zunächst jeweils in ein Deckelstück und ein Unterteil zerteilt. Anschießend wird von der Anschnittfläche aus jeweils eine Kavität in die Unterteile der Brotlaibe eingebracht. Eine derartige Vorrichtung ist aus der DE 102 47 080 A1 bekannt.

Die bekannte Vorrichtung weist eine Abtrenneinrichtung mit beispielsweise einem waagrecht verlaufenden Sägeblatt einer Kreis- oder Bandsäge zum Abtrennen des Deckels vom Unterteil auf. Dazu wird der Brotlaib auf einer Fördereinrichtung an das Sägeblatt herangeführt, so dass aufgrund der Förderbewegung das Sägeblatt durch den Brotlaib hindurchgeführt und ein Deckel vom verbleibenden Unterteil getrennt wird. Die Qualität der Trennkante, die bei diesem Abtrennvorgang erzeugt wird, ist daher von zwei Geschwindigkeiten abhängig, nämlich der Transportgeschwindigkeit der Fördereinrichtung, einerseits, und der Geschwindigkeit des Sägeblattes, andererseits. Ist also die Fördergeschwindigkeit, mit der der Brotlaib durch die Abtrenneinrichtung transportiert wird, hoch, so muss die Geschwindigkeit des Sägeblattes ebenfalls hoch sein, damit nicht Ausbrechungen entlang der Schnittkante infolge zu großen Drucks auf das Sägeblatt auftreten, sondern möglichst glatte Trennkanten insbesondere an der Kruste erzielt werden. Eine hohe Sägeblattgeschwindigkeit bedingt allerdings unerwünscht hohe Kräfte, etwa Haltekräfte am Brotlaib während des Abtrennvorgangs. Umgekehrt sollte die Fördergeschwindigkeit relativ zur Sägeblattgeschwindigkeit auch nicht zu gering sein, um den Abtrennvorgang nicht unnötig zu verlangsamen. Darüber hinaus ist sie bzw. die Sägeblattgeschwindigkeit abhängig von der Festigkeit der Kruste des zu schneidenden Brotes. Die Geschwindigkeiten müssen daher der Festigkeit verschiedener Brotlaibe anpassbar und miteinander synchronisiert sein. Die Synchronisation aber erfordert einen nicht unbedeutenden mechanischen oder software-technischen Aufwand. Zudem beeinflusst die so bestimmte Fördergeschwindigkeit den Durchsatz der gesamten Vorrichtung, weil dieselbe Fördereinrichtung die Brotlaibe nicht nur durch die Abtrenneinrichtung hindurch transportiert, sondern auch den Transport der Brotlaibe durch die gesamte Vorrichtung und alle Bearbeitungsschritte hindurch bewerkstelligt.

Die bekannte Vorrichtung erzeugt mechanisiert eine Kavität in einen Brotlaib. Dabei muss darauf geachtet werden, dass einerseits die Aushöhlung groß genug ist, um eine gewünschte Menge eines Gerichts aufnehmen zu können, und andererseits, in Abhängigkeit von der Art des Gerichtes, ausreichend starke Seitenwände stehen bleiben, so dass nach dem Einfüllen der Speisen das Brotteiggefäß nicht zu schnell durchweicht und leckt. Der zu fräsende Durchmesser ist also nicht nur abhängig von dem Durchmesser des zu bearbeitenden Brotlaibs, der chargenweise variieren kann. Der Durchmesser ist auch danach auszuwählen, welchen Flüssigkeitsanteil das Gericht, das in dem Brotlaib serviert werden soll, aufweist, und wie stark demnach die Seitenwand der zu schaffenden Brotterrine dimensioniert sein muss. Demzufolge muss es möglich sein, eine Vielzahl von unterschiedlichen Durchmessern mit der Vorrichtung zu erzeugen. Bei der bekannten Vorrichtung ist dazu ein Werkzeugwechsel erforderlich.

Es ist Aufgabe der vorliegenden Erfindung, die bekannte Vorrichtung dahingehend zu verbessern, dass die Abtrenneinrichtung einfach an unterschiedliche Randbedingungen angepasst werden kann, ohne den Bearbeitungsablauf der Gesamtvorrichtung nachteilig zu beeinflussen. Eine weitere Aufgabe besteht darin, die Fräsvorrichtung insoweit zu verbessern, als das Ausfräsen unterschiedlicher Kavitäten vereinfacht ist.

Diese Aufgaben werden durch Vorrichtungen gemäß den Patentansprüchen 1 und 10 gelöst.

Nach Anspruch 1 weist die Abtrenneinrichtung der Vorrichtung ein Messer auf, das unabhängig von einer möglichen Förderbewegung des Brotlaibs durch ihn hindurch bewegt wird. Das Messer kann günstiger Weise einen Wellenschliff aufweisen. Anstelle eines Messers kann auch ein Sägeblatt oder -band zum Einsatz kommen. Die Erfindung weicht also von dem Prinzip der bekannten Vorrichtung ab, dass die Fördereinrichtung der Brotlaibe durch die Vorrichtung hindurch zugleich die Relativbewegung zwischen Brotlaib und Messer bzw. Säge ausführt. Vielmehr basiert sie auf dem Prinzip, dass die Abtrenneinrichtung unabhängig von der Transportgeschwindigkeit der Fördereinrichtung eine selbständige Trennbewegung mit eigener Geschwindigkeit vornimmt. Dies bietet den Vorteil der Abtrennung des Deckels von dem Unterteil eines Brotlaibes auch dann, wenn die Fördereinrichtung still steht. Dies ist insbesondere dann der Fall, wenn die Vorrichtung eine feststehende Fräseinrichtung aufweist, die nur bei Stillstand der Fördereinrichtung aktiviert wird. Bei einer derartigen Vorrichtung ist es möglich, gleichzeitig mit dem Fräsen einer Brotterrine bei einem anderen Brotlaib einen Deckel abzutrennen, die Fördereinrichtung also taktweise anzuhalten, um diese beiden Bearbeitungsschritte vorzunehmen. Weist die Vorrichtung eine in Förderrichtung bewegliche Fräseinrichtung auf, so ermöglicht es die erfinderische Anordnung, die Transportgeschwindigkeit an dem Fräsvorgang auszurichten, weil nun die Bewegung der Abtrenneinrichtung in Abhängigkeit von der Transportgeschwindigkeit und den Bedingungen des zu verarbeitenden Brotes, insbesondere der Härte der Kruste, separat gesteuert werden kann.

Die Bewegung der Abtrenneinrichtung kann prinzipiell kreisförmig oder geradlinig erfolgen. Nach einer vorteilhaften Ausgestaltung der Erfindung ist die Abtrenneinrichtung um eine auf eine Zuführrichtung lotrechte Achse schwenkbar. Die Zuführebene entspricht der Transportoberfläche der Fördereinrichtung, auf der die Brotlaibe der Abtrenneinrichtung zugeführt werden. Verläuft die Zuführung in einer horizontalen Ebene, so steht demzufolge die Schwenkachse der Abtrenneinrichtung vertikal. Die Abtrenneinrichtung beschreibt folglich eine kreisförmige Bewegung, die bei kreisförmigen Brotlaiben im Allgemeinen ausreichend und konstruktiv einfach zu bewerkstelligen ist.

Nach einer dazu alternativen Ausgestaltung der Erfindung ist die Abtrenneinrichtung parallel zu der Zuführebene der Brotlaibe verschiebbar. Damit kann die Abtrenneinrichtung auch rechteckige Brotlaibe (sog. Kastenbrote) vollständig erfassen, die bei einer kreisförmigen Bewegung der Abtrenneinrichtung unter Umständen nicht vollständig bearbeitet werden könnten.

Die Vorrichtung sollte nicht nur Brotlaibe mit unterschiedlichem Grundriss, sondern auch solche mit unterschiedlicher Höhe verarbeiten können. Eine vorteilhafte Ausgestaltung der Erfindung besteht daher darin, dass die Abtrenneinrichtung lotrecht zur Zuführebene verstellbar ist. Diese Verstellbarkeit ist konstruktiv besonders einfach bei einer Abtrenneinrichtung zu verwirklichen, die um eine Achse verschwenkbar ist, weil die Schwenkachse zugleich die Verschiebungsrichtung der Abtrenneinrichtung definiert.

Die bekannte Abtrenneinrichtung weist ein Sägeblatt oder -band auf, das wie bei herkömmlichen Kreis- oder Bandsägen in eine Richtung drehend angetrieben wird. Sägen reißen mit ihren Zähnen von einer ersten Seite beginnend Material aus dem Werkstück, transportieren es zur anderen, der gegenüberliegenden zweiten Seite, an der das Sägeblatt aus dem Werkstück wieder austritt, und schaffen so eine kontinuierlich tiefer werdende Fuge im Werkstück. Die Feinheit des Fugenrandes hängt unter anderem von der Feinheit der Zahnung der Säge und der Geschwindigkeit ab, mit der die Zähne das Material aus dem Werkstück reißen. Ähnlich verhält es sich bei Messern, bei denen zwar keine Zähne das Material entfernen, dafür aber infolge Haftreibung das Material an der Schneidenfläche haftet und daher mitgerissen wird. Jedenfalls franst der Fugenrand an der zweiten Seite, an der das Sägeblatt bzw. Messer austritt, mehr oder wenige aus. Eine weitere vorteilhafte Ausgestaltung der Erfindung sieht daher vor, dass das Messer oszillierend angetrieben ist. So lässt sich ein Ausfransen entlang der Trennkante an der Unterseite oder dem Deckelstück der Brotterrine weitgehend vermeiden.

Eine weitere Maßnahme, um eine glatte Trennkante zu erzielen, kann darin bestehen, das Deckelstück während des Abtrennvorgangs festzuhalten. Daher besteht eine weitere vorteilhafte Ausgestaltung der Vorrichtung darin, dass in der Abtrenneinrichtung eine Halterung für das Deckelstück angeordnet ist, die das Deckelstück während des Abtrennvorgangs gegen eine Lageänderung relativ zum Unterteil sichert. Sie verhindert, dass das Deckelstück vor Abschluss des Abtrennvorgangs in sich bricht oder vom Unterteil gegebenenfalls unter Ausbrechen von Teilen aus der Seitenwandung des Unterteils abbricht und damit nicht mehr als Deckel zur Verfügung steht oder einen unansehnlichen Eindruck bietet.

Nach einer vorteilhaften Ausgestaltung der Erfindung umfasst die Halterung ein Mittel, das eine auf die Zuführebene lotrecht gerichtete Druckkraft auf das Deckelstück ausübt. In einer einfachen Ausgestaltung besteht die Halterung aus einem federnden Blech, das während des Abtrennvorgangs dosiert auf die Oberseite des Brotlaibs drückt.

Besonders bevorzugt ist in der Abtrenneinrichtung eine Leitvorrichtung angeordnet, die das abgetrennte Deckelstück neben den Unterteil auf der Fördereinrichtung platziert. Die Leitvorrichtung stellt dabei sicher, dass das Deckelstück so neben dem Unterteil abgelegt ist, das es bei weiteren Bearbeitungsschritten am Unterteil, insbesondere beim Einbringen der Kavität, nicht stört. Damit ist ohne großen technischen Aufwand eine genaue Zuordnung von Deckelstück und Unterteil sichergestellt, so dass eine ansprechende Optik der Brotterrine gewährleistet ist.

Die Vorrichtung zur Herstellung von Brotterrinen soll auch dafür geeignet sein, Brotterrinen mit unterschiedlichem Innendurchmesser herzustellen. Dafür Fräsköpfe mit verschiedenen Fräsendurchmessern bereitzuhalten ist kostspielig. Denn der Fräskopf kommt mit Lebensmitteln in Berührung und unterliegt daher besonderen hygienisch bedingten Anforderungen. Diese erfordern, dass der Fräskopf entweder insgesamt aus Edelstahl gefertigt ist, der aber schwerer verarbeitbar ist als Normalstahl. Oder der aus Normalstahl hergestellte Fräskopf weist eine spezielle Beschichtung auf, wodurch ein zusätzlicher aufwändiger Bearbeitungsschritt erforderlich wird. Die Herstellung des Fräskopfes ist daher sehr teuer. Dieses Problem lässt sich dadurch lösen, dass die Fräseinrichtung einen variablen Fräsendurchmesser ermöglicht. Der Fräsendurchmesser bestimmt sich dabei durch die Anordnung der Schneidelemente auf dem Fräskopf und den durch sie erzeugten fräsbaren Durchmesser. Sind die Schneidelemente verstellbar auf dem Fräskopf angeordnet, so lassen sich vorteilhafter Weise mit demselben Fräskopf unterschiedliche Durchmesser erzielen.

Gerade wegen der kostspieligen Herstellung des Fräskopfes ist eine einfache Konstruktion für den Fräskopf wünschenswert. Daher ist es vorteilhaft, wenn der Fräskopf ein Schneidelement umfasst, das verschieblich angeordnet ist. Vorzugsweise ist das Schneidelement radial und in einer Schiene geführt, die durch die Drehachse des Fräskopfes hindurch verläuft. Damit ist es möglich, eine Kavität mit einem Durchmesser entsprechend der Länge des Schneidelementes zu erzeugen, wenn das Schneidelement mittig in der Drehachse angeordnet ist. Wird es dagegen von der Drehachse aus nach außen verstellt, so schafft der Fräskopf eine Kavität mit einem entsprechend größeren Durchmesser, der bis zu der doppelten Länge des Schneidelementes reichen kann. Diese Konstruktion stellt also eine konstruktiv einfache und daher kostengünstige Möglichkeit eines Fräskopfes für unterschiedliche Durchmesser dar.

Es kann vorteilhaft sein, wenn der Fräskopf zusätzlich wenigstens ein unverschiebliches Schneidelement aufweist, das sich auf dem Fräskopf im Wesentlichen radial und von Drehachse des Fräskopfes nach außen hin erstreckt. Es definiert dann einen Mindestdurchmesser der Kavität, während das/die verschiebliche(n) Schneidelement(e) den Bereich bis zu einem Maximaldurchmesser abdecken.

Grundsätzlich ist die Anordnung der verschieblichen und unverschieblichen Schneidelemente beliebig. Ihr sind im Wesentlichen konstruktive Grenzen gesetzt. Eine vorteilhafte Ausgestaltung der Erfindung stellt es dar, wenn der Fräskopf eine unverschiebliche Mittelschneide und eine verschiebliche Außenschneide aufweist, die bezüglich der Drehachse des Fräskopfes zueinander einen Winkel einschließen. Durch eine Anordnung im Winkel zueinander und nicht parallel nebeneinander lassen sich die auf den Fräskopf wirkenden Kräfte gleichmäßig verteilen.

Auch der Fräskopf der vorliegenden Vorrichtung unterliegt der Abnutzung. Ein Fräskopfwechsel ist aus oben genannten Gründen kostspielig. Nach einer vorteilhaften Ausgestaltung der Erfindung umfasst der Fräskopf einen Schneidelementehalter, in den ein verschiebliches und/oder ein unverschiebliches Schneidelement einsetzbar und auswechselbar sind. Damit muss bei Abnutzung nicht der gesamte Fräskopf, sondern müssen nur die Schneidelemente ausgetauscht werden, was kostengünstiger ist.

Nach einer weiteren vorteilhaften Ausgestaltung der Erfindung ist das verschiebliche Schneidelement auf Rastpunkten verstellbar. Dies erleichtert insbesondere die wiederholte Einstellung eines bestimmten Durchmessers und steigert so die Bedienerfreundlichkeit.

Jeder Wechsel eines zu fräsenden Durchmessers führt im Allgemeinen dazu, dass der Fräskopf demontiert werden muss. Je länger dieser Vorgang dauert, umso geringer ist der Durchsatz und damit der Wirkungsgrad der Vorrichtung. Daher ist nach einer besonders bevorzugten Ausgestaltung der Erfindung das verschiebliche Schneidelement ohne Demontage des Fräskopfes verstellbar. Dazu sind Feststelleinrichtungen der Schneidelemente am einsatzbereit montierten Fräskopf so angebracht, dass sie zumindest in einer Stellung des Fräskopfes für einen Bediener zugänglich sind. Damit verkürzen sich die Rüstzeiten beim Verstellen des Durchmessers des Fräskopfes.

Vor allem in Hinblick auf die Arbeitssicherheit an einer Vorrichtung birgt die Manipulation von Werkzeugen, insbesondere solchen, die schnell rotieren, Gefahren infolge fehlerhafter Montage durch den Bediener. Bei einer besonders bevorzugten Ausgestaltungsform der Erfindung ist daher der Fräsendurchmesser maschinell, insbesondere während des Betriebs der Fräse veränderbar. Dies vermindert einerseits die Beeinträchtigung der Arbeitssicherheit an der Vorrichtung für den Bediener. Andererseits ist es mit einem während des Fräsens veränderbaren Fräsendurchmessers mit einer feststehenden Fräse möglich, auch beispielsweise sich kegelstumpfförmig nach unten verjüngende oder die für die zumindest in Bayern verbreitete "Löwenterrine" typische bauchige Innenform in einem Brotlaib zu erzeugen.

Der Brotlaib wir auf der Fördereinrichtung von einer Halteeinrichtung aufgenommen, in der er sowohl in der Abtrenneinrichtung als auch in der Fräseinrichtung bearbeitet wird. Vor allem beim Fräsen ist des wichtig, dass er Brotlaib konzentrisch zur Drehachse der Fräseinrichtung angeordnet ist. Daher stellt es eine vorteilhafte Ausgestaltung der Erfindung mit einer Fördereinrichtung, die in die Fördereinrichtung integrierte Mittel zum Fixieren des Brotlaibs umfasst, dar, dass die Mittel in Abhängigkeit vom Ort in der Vorrichtung selbsttätig zentrieren und wieder öffnen. Das Zentrieren kann erfolgen, indem ringförmig angeordnete Haltezangen sich gleichzeitig und gleichmäßig auf einander zu und auf ein gemeinsames Zentrum hin bewegen. Diese Bewegung und ein Öffnen der Haltezangen finden vorteilhafter Weise selbsttätig und jeweils an derselben Position der Fördereinrichtung statt. Dies kann zum Beispiel mechanisch erreicht werden, indem die Haltezangen von der Fördereinrichtung gegen ortsfeste Anlaufflächen in der Vorrichtung gedrängt werden, die die jeweilige Bewegung auslösen. Alternativ können die Haltezangen von Stellmotoren bewegt werden, die in Abhängigkeit von ihrer Position geschaltet werden. Damit steht die Vorrichtung zur Aufnahme eines neuen Brotlaibs und zur Abgabe einer fertigen Brotterrine automatisch bereit.

Die Erfindung wird im Folgenden unter Hinweis auf die beigefügten Figuren anhand eines Ausführungsbeispiels näher erläutert. Es stellen dar:
- Figur 1: eine Gesamtansicht einer Vorrichtung zur Herstellung von Brotterrinen,
- Figur 2: eine Teilansicht einer Abtrenneinrichtung ,
- Figur 3a: eine Ansicht eines Fräskopfes mit zusammen geschobenen verschieblichen Schneidelementen,
- Figur 3b: eine Ansicht des Fräskopfes mit auseinander geschobenen verschieblichen Schneidelementen,
- Figur 4a: einen Teilschnitt eines verstellbaren Fräskopfs und
- Figur 4b: eine Teildraufsicht auf einen verstellbaren Fräskopf.

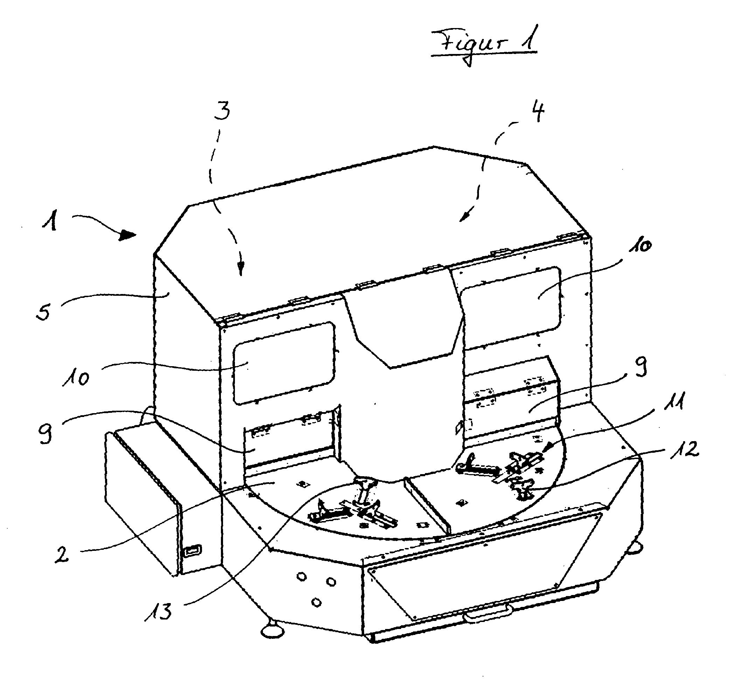

Eine Ansicht einer Vorrichtung 1 zur Herstellung von Brotterrinen zeigt Figur 1. Eine Fördereinrichtung 2 führt (nicht dargestellte) Brotlaibe 6 einer Abtrenneinrichtung 3 und einer Fräseinrichtung 4 zu, die aus hygienischen und Sicherheitsgründen in einem Gehäuse 5 gekapselt sind. Die Fördereinrichtung 2 durchtritt das Gehäuse 5 durch Klappen 9, die auch ein Passieren von Brotlaiben 6 auf der Fördereinrichtung 2 ermöglichen. Die Arbeit der beiden Einrichtungen 3, 4 können durch Acrylsichtfenster 10 im Gehäuse 5 überwacht werden. Die Wartung der Einrichtungen 3, 4 erfolgt über nicht dargestellte Öffnungen auf der Rückseite des Gehäuses 5. Das Gehäuse 5 überdeckt die tellerförmige Fördereinrichtung 2 nur zum Teil, so dass in ihrem freiliegenden Teil ein neuer Brotlaib 6 aufgebracht und ein bearbeiteter durch einen Bediener von der Fördereinrichtung 2 abgenommen werden kann, ohne dass dieser große Wege zurücklegen muss. Um jeden Brotlaib 6 unabhängig von seinem Durchmesser den Einrichtungen 3, 4 positionsgerecht zuzuführen, weist die Fördereinrichtung 2 Halteeinrichtungen 11 mit kreisförmig angeordneten Haltezangen 12 auf. Beim Schließen legen sich die Haltezangen 12 an den Brotlaib 6 an und bewegen sich gleichmäßig aufeinander zu. Dabei zentrieren diese den Brotlaib 6 und bringen ihn in die zur weiteren Bearbeitung erforderlichen Lage. Die Haltezangen 12 weisen Dorne 13 auf, mit denen sie sich zugleich in die Kruste des Brotlaibs 6 verkrallen, um den Brotlaib 6 während der Bearbeitung unverrückbar fest zu halten, um ihn etwa gegen Mitdrehen beim Fräsen zu hindern. In Figur 1 sind die Haltezangen in einer geöffneten Stellung dargestellt. Haben sie das Gehäuse 5 verlassen, öffnen sie selbsttätig, so dass der Bediener der Halteeinrichtung 11 einen bearbeiteten Brotlaib 6 entnehmen und ihr einen unbearbeiteten einsetzen kann.

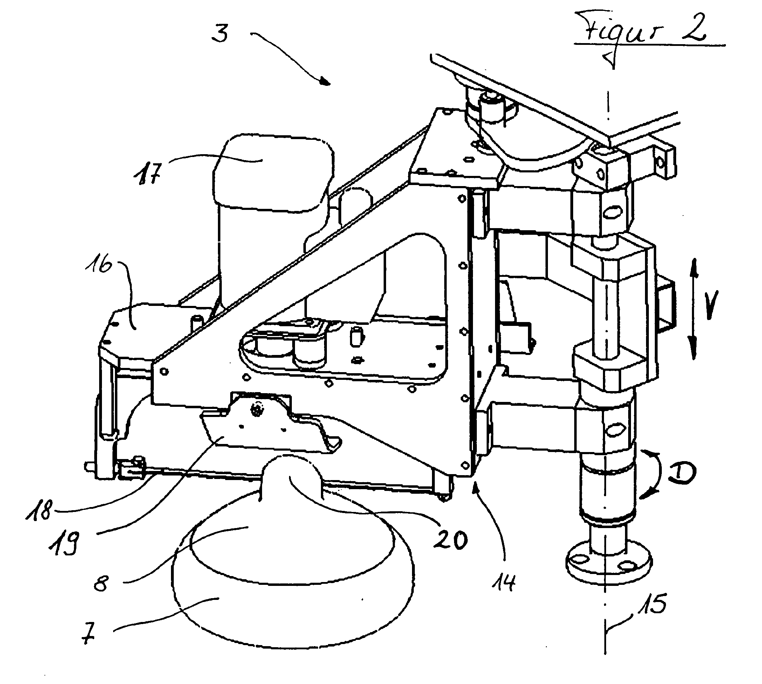

Eine in dem Gehäuse 5 angeordnete Abtrenneinrichtung 3 zeigt Figur 2. Sie umfasst einen Ausleger 14, der um eine senkrechte Achse 15 in die Richtungen des Doppelpfeils D schwenkbar angeordnet ist. Ein die Achse 15 darstellendes Bauteil ist mit der Vorrichtung 1 ortsfest verbunden. Entlang der Achse 15 ist der Ausleger 14 zusätzlich vertikal in die Richtungen des Doppelpfeils V verschieblich. Der Ausleger 14 umfasst eine Platte 16, die einen Motor 17 trägt, der ein Messer 18 in dessen Längsrichtung oszillierend antreibt. Etwa mittig über dem Messer 18 ist ein federndes Blech 19 abgeordnet, das in Richtung vom Messer 18 weg einfedern kann.

Im Betrieb der Vorrichtung 1 wird der Abtrenneinrichtung 3 mittels der Fördereinrichtung 2 ein Brotlaib 6 zugeführt. Während die Fördereinrichtung 2 angehalten wird, um einen Brotlaib 6 zu fräsen, kommt ein nachfolgender Brotlaib 6 bei der Abtrenneinrichtung zum Stehen. Jetzt schwenkt die Abtrenneinrichtung 3 um die Achse 15 auf den Brotlaib 6 zu. Sie zieht das oszillierende Messer 18 durch den Brotlaib 6, um diesen in ein Unterteil 7 und ein Deckelstück 8 zu zerteilen. Damit das Deckelstück 8 nicht in sich bricht oder vor Abschluss des Trennvorgangs vom Unterteil 7 abbricht, drückt das Blech 19 auf das Deckelstück 8 und hält es so in seiner Lage auf dem Unterteil 7.

Um Brotlaibe 6 unterschiedlicher Größe und Form bearbeiten zu können, weist die Abtrenneinrichtung Verstellmöglichkeiten auf: um die Abtrenneinrichtung für Brotlaibe 6 unterschiedlicher Höhe zerteilen zu können, ist der Ausleger entlang der Achse 15 verschieblich ausgebildet. Sollen Deckestücke 8 verschiedener Höhe hergestellt werden können, so sind das Messer 18 und das federnde Blech 19 gegenüber der Platte 16 verstellbar einzurichten. Schließlich können sowohl die Geschwindigkeit des Messers 18 als auch die Schwenkgeschwindigkeit des Auslegers 14 variiert werden. Eine geeignete Geschwindigkeit für die oszillierende Bewegung des Messers 18 liegt bei ca. 1000 Hub/min bei einer Vorschubgeschwindigkeit des Messers 18 von ca. 10 cm/s.

Das federnde Blech 19 stellt die einfachste Ausführung einer Halterung für das Deckelstück 8 dar, die bei nahezu jeder Deckelform Wirkung hat. Kommt dagegen nur eine bestimmte Form eines Deckelstücks 8 zur Verarbeitung, etwa die in Figur 2 dargestellte mit einem Nocken 20, so ist die Halterung vorteilhafter Weise daran anzupassen. Sie kann dann in einer Walze bestehen, die eine der Nocke 20 entsprechende umlaufende Vertiefung aufweist. Eine derartige Halterung ist geeignet, zusätzlich wenigstens einen Teil der horizontalen Kräfte, die während des Abtrennvorgangs durch das oszillierende Messer 18 auf das Deckelstück einwirken, aufzunehmen und so einem Bruch des Deckelstücks 8 entgegenzuwirken.

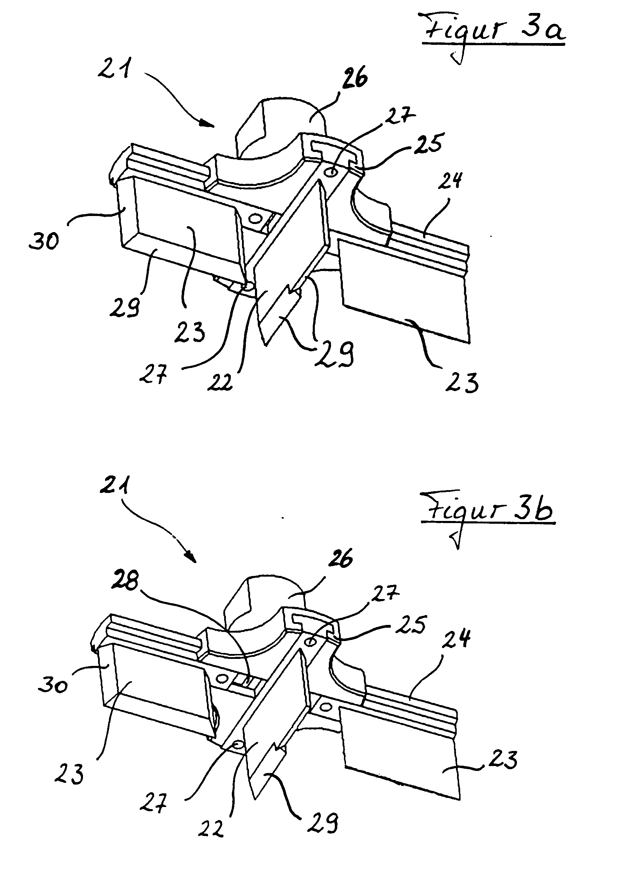

Einen Fräskopf 21 der Vorrichtung 1 zeigen die Figuren 3a und 3b. Er umfasst ein unverschiebliches Schneideelement 22 und zwei verschiebliche Schneidelemente 23. Sie weisen jeweils einen Fuß 24 auf, der in einer Schiene 25 einem Schneidelementenhalter 26 auswechselbar gehalten ist. Die Schienen 25 sowohl des unverschiebliche Schneidelements 22 als auch der verschieblichen Schneidelemente 23 verlaufen radial und kreuzen sich daher in der Drehachse des Fräskopfes 21. Sie stehen in einem rechten Winkel aufeinander. Jeder Fuß 24 der Schneidelemente 22, 23 weist Verriegelungen 27 auf, die in zugeordneten Rasten 28 in den Schienen 25 verrasten und die Schneidelemente 22, 23 ortsfest im Fräskopf 21 befestigen. Die Verriegelungen 27 bestehen in einer einfachen Ausführung aus Schrauben, die in einem Gewinde im Fuß 24 eingedreht sind und daher nicht notweniger Weise in ein entsprechendes Gewinde in der Schiene 25, sondern dort zwischen Vorsprünge eingreifen und so das Schneidelement 22, 23 unverrückbar halten. Die Schneidelemente 22, 23 tragen Bodenschneiden 29, die in einem Endzustand der Brotterrine deren Boden erzeugen, und Wandschneiden 30, die in einem rechten Winkel zu den Bodenschneiden 29 stehen.

Das unverschiebliche Schneidelement 22 ist mittig auf dem Schneidelementenhalter 26 angeordnet, so dass seine Symmetrieachse in der Drehachse des Fräskopfes 21 liegt. Es ist mit Schneiden 29 ausgestattet, die entsprechend der Drehrichtung des Fräskopfes 21 ausgerichtet sind. Die Schneiden 29 können auch durch einen durchgehend als Dachprofil angebrachten Schliff ausgebildet sein. Dann kann das Schneidelement 22 bei entsprechender Dimensionierung seiner Länge und des Fußes 24 auch als verschiebliches Schneidelement 23 verwendet werden, womit ein weitgehendes Gleichteilekonzept erreicht ist. Außerdem kann bei gleichartiger Gestaltung der Schneidelemente 22, 23 und bei symmetrischer Konstruktion des Schneidelementenhalters 26 jedes Schneidelement 22, 23 an jeder beliebigen Position im Fräskopf 21 eingesetzt, und so einem einseitigen Abnutzen der Schneiden 29 entgegengewirkt werden.

Ohne Montage der verschieblichen Schneidelemente 23 lässt sich ein Mindestdurchmesser in der Größe der Länge des unverschieblichen Schneidelements 22 erzeugen. Durch Einsatz der verschieblichen Schneidelemente 23 lässt er sich beispielsweise von einem nur geringfügig größeren Durchmesser bei Schneidelementen 23 in einer eingefahrenen Position, wie in Figur 3a gezeigt, bis zu einem Maximaldurchmesser bei Schneidelementen 23 in einer ausgefahrenen Position, wie in Figur 3b dargestellt, variieren. In jeder sowohl dieser als auch der dazwischen liegenden Positionen sind die Schneidelemente 23 mittels der Verriegelungen 24 in den Rasten 25 feststellbar.

Die in Figuren 3a und 3b dargestellten Schneidelemente 22, 23 weisen Bodenschneiden 29 und Wandschneiden 30 auf, die zueinander rechtwinklig angeordnet sind. Sie können jedoch auch in anderer Weise, z.B. in einem Winkel mit mehr als 90° zueinander oder mit einer Ausrundung im Scheitelpunkt versehen sein, um eine jeweils andere Gestaltung des ausgefrästen Innenraums der Brotterrine zu erzielen.

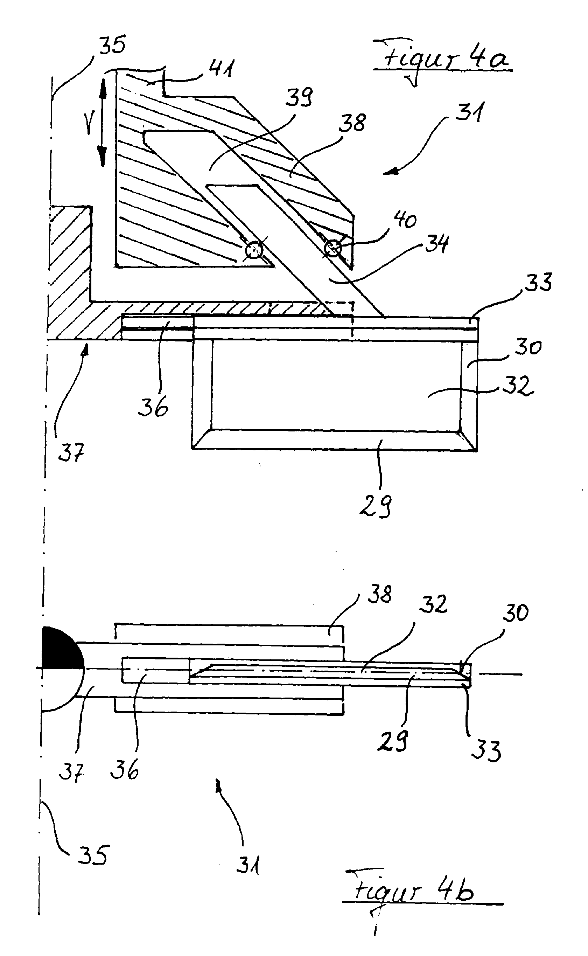

Figur 4 stellt ein Prinzip eines während des Betriebs verstellbaren Fräskopfes 31 dar. Der Fräskopf 31 umfasst ein Schneidelement 32 mit einer Bodenschneide 29, einer Wandschneide 30 und einem Fuß 33, das insoweit mit den Schneidelementen 22, 23 der Figuren 3a und 3b vergleichbar ist. Abweichend davon ist der Fuß 33 in der Schiene 34 leicht verschieblich gelagert. Dies kann durch eine spezielle Oberflächenbehandlung der Berührflächen des Fußes 33 und der Schiene 34 oder durch (nicht dargestellte) Längslager sichergestellt sein. Außerdem steht von dem Fuß 33 ein Führungszapfen 34 in einem Winkel von etwa 45° ab und verläuft in der Ebene des Schneidelements 32 in Richtung auf eine Drehachse 35 des Fräskopfes 31 hin. Der Fuß 33 ist in einer Schiene 36 gelagert, die Bestandteil eines Schneidelementshalters 37 des Fräskopfes 31 ist. Der Führungszapfen 34 ragt in ein Führungselement 38 hinein, das einen entsprechend der Neigung des Führungszapfens 34 geneigten Kanal 39 aufweist, in dem der Führungszapfen 34 über Längslager 40 gelagert ist. Das Führungselement 38 ist Bestandteil des Fräskopfes 31 und parallel zur dessen Drehachse 35 in den Richtungen des Doppelpfeils V vertikal verschieblich angeordnet. Über ein Steuerstück 41 lässt sich das Führungselement 38 in der Höhenlage verschieben.

Die Neigung des Führungszapfens 34 und des ihn zumindest teilweise umgebenden Kanals 39 dienen dazu, eine Vertikalbewegung des Führungselements 38 in eine Richtung des Pfeils V in eine Horizontalbewegung des Schneidelements 32 entlang der Schiene 36 umzusetzen. An diesen Zweck sind die Neigungen des Führungszapfens 34 und des Kanals 38 anzupassen und können in Abhängigkeit von sonstigen Randbedingungen einen größeren oder kleineren Winkel aufweisen. Wird nun das Führungselement 38 beispielsweise nach unten in Richtung auf den Schneidelementhalter 37 hin verschoben, so übt die Längslagerung 40 sowohl eine vertikale als auch eine horizontale Kraft auf den Führungszapfen 34 aus. Dieser überträgt die Kräfte auf den Fuß 33. Er kann der vertikalen Kraft nicht ausweichen, sondern lediglich der horizontalen durch Bewegung in der Längsrichtung der Schiene 36. Bei einer Abwärtsbewegung des Führungselements 38 tut er dies, indem er sich in Richtung auf die Drehachse hin bewegt. Mit ihm bewegt sich also das Schneidelement 32 nach innen, wodurch sich der Schneidradius des Fräskopfes 31 verkleinert. Demzufolge entsteht eine Vergrößerung des Schneidradius, wenn das Führungselement 38 am Steuerstück 41 nach oben gezogen wird. Da die vertikale Kraft von der Schiene 36 des Schneidelementenhalters 37 aufgenommen wird, muss durch eine entsprechende Lagerung sicher gestellt sein, dass durch die Übertragung der vertikalen Kraft keine Blockierung der horizontalen Bewegung des Fußes 33 in der Schiene 34 auftritt.

Vorteilhafter Weise dreht sich das Führungselement 38 mit dem Schneidelementhalter 37 mit, da sonst neben der Verschiebebewegung des Führungszapfens 34 im Kanal 39 eine weitere Relativbewegung in Drehrichtung auftreten würde, die entsprechend zu lagern wäre. Die Lagerung der Drehbewegung des Führungselements 38 (nicht dargestellt) erfolgt am Steuerstück 41 und muss Zug- und Druckkräfte in den Richtungen des Doppelpfeils V aufnehmen. In dieser Weise kann das Steuerstück zum Beispiel an einem parallel zur Drehrichtung des Führungselements 38 verlaufenden Ring gelagert sein, auf den dann Stellkräfte zur Veränderung des Radius des Fräskopfes 31 wirken.

Die in Figur 4 dargestellte prinzipielle Anordnung ermöglicht eine Verstellung des Schneidradius des Fräskopfes 31 während des Betriebs einer Fräseinrichtung. Das Führungselement 38 ist dabei so angeordnet, dass in jeder Stellung des Schneidelements 32, also auch bei einem Minimaldurchmesser, die Wandschneide 30 den größten Umfang des Fräskopfes 31 beschreibt. Dies Anordnung ermöglicht folglich - bei entsprechender Ausgestaltung der Schneidelemente - eine Variation des Innendurchmessers eine Brotterrine, so dass zum Beispiel eine sich zum breiten Boden der Terrine hin bauchig weitende Innenform erzeugt werden kann, vergleichbar einer "Löwenterrine", in der in Bayern gewöhnlich Suppen serviert werden.

### Bezugszeichenliste

- 1: Vorrichtung
- 2: Fördereinrichtung
- 3: Abtrenneinrichtung
- 4: Fräseinrichtung
- 5: Gehäuse
- 6: Brotlaib
- 7: Unterteil
- 8: Deckelstück
- 9: Klappe
- 10: Acrylfenster
- 11: Halteeinrichtung
- 12: Haltezange
- 13: Dorn
- 14: Ausleger
- 15: Achse
- 16: Platte
- 17: Motor
- 18: Messer
- 19: federndes Blech
- 20: Nocke
- 21: Fräskopf
- 22: unverschiebliches Schneidelement
- 23: verschiebliches Schneidelement
- 24: Fuß
- 25: Schiene
- 26: Schneidelementenhalter
- 27: Verriegelung
- 28: Raste
- 29: Bodenschneide
- 30: Wandschneide
- 31: Verstellbarer Fräskopf
- 32: Schneidelement
- 33: Fuß
- 34: Führungszapfen
- 35: Drehachse
- 36: Schiene
- 37: Schneidelementhalter
- 38: Führungselement
- 39: Kanal
- 40: Längslager
- 41: Steuerstück

## Patentansprüche

1. Vorrichtung (1) zur Herstellung von Brotterrinen (10) aus Brotlaiben (6), mit einer Abtrenneinrichtung, mit der ein Deckelstück (8) eines Brotlaibs (6) von einem Unterteil (7) abtrennbar ist, und mit einer Fräseinrichtung (2), mit der von einer Abtrennfläche aus in das Unterteil (7) eine Kavität (9) einfräsbar ist, **dadurch gekennzeichnet, dass** die Abtrenneinrichtung ein Messer aufweist, das unabhängig von einer möglichen Förderbewegung des Brotlaibs (6) durch ihn hindurch bewegbar ausgebildet ist.

2. Vorrichtung nach Anspruch 1, **dadurch gekennzeichnet, dass** die Abtrenneinrichtung um eine auf eine Zuführebene lotrechte Achse schwenkbar ist.

3. Vorrichtung nach Anspruch 1, **dadurch gekennzeichnet, dass** die Abtrenneinrichtung parallel zur Zuführebene der Brotlaibe (6) zur Abtrenneinrichtung verschiebbar ist.

4. Vorrichtung nach einem der obigen Ansprüche, **dadurch gekennzeichnet, dass** die Abtrenneinrichtung lotrecht zur Zuführebene verstellbar ist.

5. Vorrichtung nach einem der obigen Ansprüche, **dadurch gekennzeichnet, dass** das Messer oszillierend angetrieben ist.

6. Vorrichtung (1) zur Herstellung von Brotterrinen (10) aus Brotlaiben (6), insbesondere nach einem der obigen Ansprüche, **dadurch gekennzeichnet, dass** in der Abtrenneinrichtung eine Halterung für das Deckelstück (8) angeordnet ist, die das Deckelstück (8) während des Abtrennvorgangs gegen eine Lageänderung relativ zum Unterteil (7) sichert.

7. Vorrichtung nach Anspruch 6, **dadurch gekennzeichnet, dass** die Halterung ein Mittel umfasst, das eine auf die Zuführebene lotrecht gerichtete Druckkraft auf das Deckelstück (8) ausübt.

8. Vorrichtung (1) zur Herstellung von Brotterrinen (10) aus Brotlaiben (6), insbesondere nach einem der obigen Ansprüche, **dadurch gekennzeichnet, dass** eine Leitvorrichtung angeordnet ist, die das abgetrennte Deckelstück (8) neben den Unterteil (7) auf der Fördereinrichtung platziert.

9. Vorrichtung (1) zur Herstellung von Brotterrinen (10) aus Brotlaiben (6), mit einer Fräseinrichtung (2), mit der in ein Unterteil (7) des Brotlaibs (6) von einer Abtrennfläche aus eine Kavität (9) einfräsbar ist, **dadurch gekennzeichnet, dass** die Fräseinrichtung (2) einen variablen Fräsendurchmesser aufweist.

10. Vorrichtung nach Anspruch 9, **dadurch gekennzeichnet, dass** die Fräseinrichtung (2) einen Fräskopf mit einem Schneidelement umfasst, das vorzugsweise radial verschieblich angeordnet ist.

11. Vorrichtung nach Anspruch 9, **dadurch gekennzeichnet, dass** der Fräskopf zusätzlich ein unverschiebliches Schneidelement aufweist, das sich auf dem Fräskopf im Wesentlichen radial und von Drehachse des Fräskopfes nach außen hin erstreckt.

12. Vorrichtung nach Anspruch einem der Ansprüche 9 oder 10, **dadurch gekennzeichnet, dass** der Fräskopf ein unverschiebliches Mittelschneidelement und ein verschiebliches Außenschneidelement aufweist, die bezüglich der Drehachse des Fräskopfes zueinander einen Winkel einschließen.

13. Vorrichtung nach einem der Ansprüche 9 bis 12, **dadurch gekennzeichnet, dass** der Fräskopf einen Schneidenhalter umfasst, in den eine unverschiebliche und/oder ein verschiebliches Schneidelement einsetzbar und auswechselbar ist.

14. Vorrichtung nach einem der Ansprüche 9 bis 13, **dadurch gekennzeichnet, dass** das verschiebliche Schneidelement auf Rastpunkten verstellbar ist.

15. Vorrichtung nach einem der Ansprüche 10 bis 14, **dadurch gekennzeichnet, dass** das verschiebliche Schneidelement ohne Demontage des Fräskopfes verstellbar ist.

16. Vorrichtung (1) nach Anspruch 10, 11 oder 15, **dadurch gekennzeichnet, dass** der Fräsendurchmesser maschinell, insbesondere während des Betriebs der Fräse, veränderbar ist.

17. Vorrichtung (1) zur Herstellung von Brotterrinen (10) aus Brotlaiben (6), mit einer Abtrenneinrichtung nach einem der Ansprüche 1 bis 7 und/oder einer Leitvorrichtung nach Anspruch 8 und einer Fräseinrichtung nach einem der Ansprüche 9 bis 16.

18. Vorrichtung (1) zur Herstellung von Brotterrinen (10) aus Brotlaiben (6), insbesondere nach einem der obigen Ansprüche, mit einer Fördereinrichtung, die in die Fördereinrichtung integrierte Mittel zum Fixieren des Brotlaibs (6) aufweist, **dadurch gekennzeichnet, dass** die Mittel in Abhängigkeit vom Ort in der Vorrichtung selbsttätig zentrieren und wieder öffnen.
